# DEMANDE DE BREVET EUROPEEN

(11) **EP 3 904 853 A1**
(43) Date de publication de la demande: **03.11.2021**
(21) Numéro de dépôt: 20172276.6
(22) Date de dépôt: 30.04.2020
(51) Int. Cl.: G01K 15/00

(54) **PROCÉDE DE CALIBRATION D'AU MOINS UN CAPTEUR DE TEMPÉRATURE ÉLECTRONIQUE**

(71) Demandeur: The Swatch Group Research and Development Ltd, 2074 Marin (CH)
(72) Inventeur: WILLEMIN, Michel, 2515 Prêles (CH); STAUFFER, Jérôme, 2000 Neuchâtel (CH); SCORDILIS, Thierry, 2036 Cormondrèche (CH)
(74) Mandataire: ICB SA

(57) **Abrégé**

L'invention se rapporte à un procédé de calibration d'un capteur de température électronique liée à un dispositif mobile faisant partie d'un ensemble avec le capteur de température. Le dispositif comprend un microprocesseur et des moyens mémoire reliés au microprocesseur, pour stocker une application couplée à une interface de saisie de données. Le capteur de température est placé initialement dans plusieurs environnements prédéterminés, où il fournit une valeur de température brute initiale mesurée dans chaque environnement, et, pour chacun de ces environnements, une valeur de température initiale prédéterminée correspondant à la température réelle de cet environnement est préalablement saisie directement dans l'application via l'interface. Le procédé consiste à calculer (10) une courbe de calibration selon chaque valeur de température initiale prédéterminée saisie de l'application et de chaque valeur de température brute initiale correspondante fournie par le capteur de température, à stocker (12) dans le dispositif ou dans le capteur, des paramètres de calibration déterminés à partir de la courbe de calibration, et à corriger (14) par les paramètres de calibration chaque valeur de température brute mesurée par le capteur.

## Description

### Domaine technique

L'invention concerne un procédé de calibration d'au moins un capteur de température électronique.

L'invention concerne également un ensemble configuré pour mettre en oeuvre un tel procédé de calibration, l'ensemble comprenant un dispositif mobile en liaison avec au moins un capteur de température électronique.

### Arrière-plan technologique

Dans le domaine des capteurs de température électroniques, les capteurs sont généralement calibrés en usine. Cette opération, effectuée automatiquement (par exemple via une enceinte thermique ou un banc d'essai) ou par un opérateur, ajoute une étape supplémentaire à la fabrication de tels capteurs, ce qui engendre des coûts supplémentaires. De plus, la calibration d'usine est souvent peu fiable, car il y a des conditions différentes d'environnement de production par rapport à celui de l'utilisateur final. De ce fait, des disparités entre plusieurs capteurs identiques, placés dans un même endroit de calibration, peuvent apparaitre.

Afin de résoudre tout ou partie de ces inconvénients, il est connu des procédés de calibration de capteurs de température électroniques effectués hors d'usine, directement par l'utilisateur du capteur. Un tel procédé est par exemple décrit dans la demande de brevet EP 3 470 805 A1. Ce document décrit un procédé de calibration d'un capteur de température pour un thermomètre clinique portable à chaque fois que le capteur de température doit être remplacé. Le procédé comprend une étape d'acquisition de résistance de base consistant à échantillonner une valeur de résistance de base pour un capteur de température, ajustable de manière amovible. Le thermomètre est monté sur un bracelet que l'utilisateur peut placer en utilisation sur son poignet. Un coefficient d'étalonnage relatif à la température, nécessaire à la calibration du capteur, est calculé dans un organe de calcul de l'unité principale du thermomètre clinique. Le calcul du coefficient d'étalonnage est effectué sur la base d'une différence entre la valeur de résistance de base acquise et une valeur de résistance de base préalablement mesurée via une jauge de température standard. Le coefficient d'étalonnage est stocké dans un support de stockage du dispositif de mesure, et est transmis à l'unité principale du thermomètre clinique. Une communication de données sans fil (par exemple via un protocole de communication Bluetooth) est ensuite effectuée du thermomètre clinique portable vers une tablette informatique ou un smartphone, ce qui permet une lecture à distance par un praticien (après calibration du capteur par le patient) des températures mesurées sur le corps de ce patient.

Toutefois, un inconvénient d'un tel procédé de calibration est que pour effectuer la calibration, il est nécessaire de recourir à une résistance de base, ainsi qu'à une jauge de température. Cette opération est relativement complexe et contraignante pour l'utilisateur du capteur. D'autres procédés de calibration de capteurs de température électroniques connus impliquent le recours par l'utilisateur à un thermomètre extérieur, ce qui entraîne le même inconvénient.

### Résumé de l'invention

L'invention a donc pour but de proposer un procédé de calibration d'au moins un capteur de température électronique, permettant à un utilisateur d'effectuer lui-même la calibration du capteur de manière simplifiée et non contraignante, directement dans l'environnement cible du capteur.

A cet effet, l'invention concerne un procédé de calibration d'au moins un capteur de température électronique, qui comprend les caractéristiques mentionnées dans la revendication indépendante 1.

Des formes particulières du procédé de calibration sont définies dans les revendications dépendantes 2 à 5.

Le procédé de calibration selon l'invention permet à un utilisateur, en particulier grâce à l'utilisation d'un dispositif mobile stockant une application couplée à une interface de saisie de données, d'effectuer lui-même la calibration du capteur de température de manière simplifiée et non contraignante. En effet, l'utilisateur peut facilement effectuer la calibration du capteur de température directement dans son dispositif mobile, en collaboration avec le capteur. En outre un tel procédé de calibration selon l'invention est particulièrement fiable, car l'utilisateur effectue la calibration du capteur de température directement dans l'environnement cible de ce dernier. Enfin, un tel procédé de calibration selon l'invention permet indirectement de simplifier grandement la production du ou des capteur(s) de température ainsi calibré(s).

Selon un premier mode de réalisation de l'invention, les étapes de calcul de la courbe de calibration et de correction de chaque valeur de température brute mesurée par le capteur sont effectuées par le dispositif mobile, et les paramètres de calibration sont stockés dans le dispositif mobile au cours de l'étape de stockage, le capteur transmettant au dispositif mobile, via une liaison de données unidirectionnelle, des valeurs de température brutes non corrigées. Ce premier mode de réalisation offre l'avantage de réduire la taille des composants électroniques au sein du capteur de température (les étapes de calcul et de correction étant effectuées par le dispositif mobile), et donc de réduire les coûts de fabrication du capteur.

Selon un deuxième mode de réalisation de l'invention, les étapes de calcul de la courbe de calibration et de correction de chaque valeur de température brute mesurée par le capteur sont effectuées par le capteur de température, et les paramètres de calibration sont stockés dans le capteur au cours de l'étape de stockage, le dispositif mobile transmettant au capteur, via une liaison de données bidirectionnelle, ladite au moins une valeur de température initiale prédéterminée, le capteur transmettant au dispositif mobile, via la liaison de données bidirectionnelle, des valeurs de température corrigées. Ce deuxième mode de réalisation offre l'avantage que la calibration n'est effectuée qu'une et une seule fois par l'utilisateur du capteur, le capteur étant ensuite correctement calibré pour toutes ses utilisations ultérieures. En outre, le capteur de température fournit des valeurs de températures déjà corrigées.

Selon un troisième mode de réalisation de l'invention, l'étape de calcul de la courbe de calibration est effectuée par le dispositif mobile, l'étape de correction de chaque valeur de température brute mesurée par le capteur est effectuée par le capteur de température, et les paramètres de calibration sont stockés dans le capteur au cours de l'étape de stockage, le dispositif mobile transmettant au capteur, via une liaison de données bidirectionnelle, lesdits paramètres de calibration, le capteur transmettant au dispositif mobile, via la liaison de données bidirectionnelle, des valeurs de température corrigées. Ce troisième mode de réalisation offre l'avantage que la calibration n'est effectuée qu'une et une seule fois par l'utilisateur du capteur, le capteur étant ensuite correctement calibré pour toutes ses utilisations ultérieures. En outre, le capteur de température fournit des valeurs de températures déjà corrigées. Enfin, par rapport au deuxième mode de réalisation décrit ci-dessus, le procédé selon le troisième mode de réalisation de l'invention permet de réduire le nombre de calculs effectués par le capteur (l'étape de calcul étant effectuée par le dispositif mobile).

A cet effet, l'invention concerne également un ensemble configuré pour mettre en œuvre le procédé de calibration tel que décrit ci-dessus, et qui comprend les caractéristiques mentionnées dans la revendication indépendante 6.

### Brève description des figures

Les buts, avantages et caractéristiques du procédé de calibration d'au moins un capteur de température électronique selon l'invention apparaîtront mieux dans la description suivante sur la base d'au moins une forme d'exécution non limitative illustrée par les dessins sur lesquels :
- la figure 1 est une représentation schématique d'un ensemble configuré pour mettre en œuvre le procédé de calibration selon l'invention, dans une première variante de réalisation ;
- la figure 2 est une représentation schématique analogue à celle de la figure 1, dans une seconde variante de réalisation ; et
- la figure 3 est un organigramme représentant des étapes d'un procédé de calibration d'au moins un capteur de température électronique selon l'invention.

### Description détaillée de l'invention

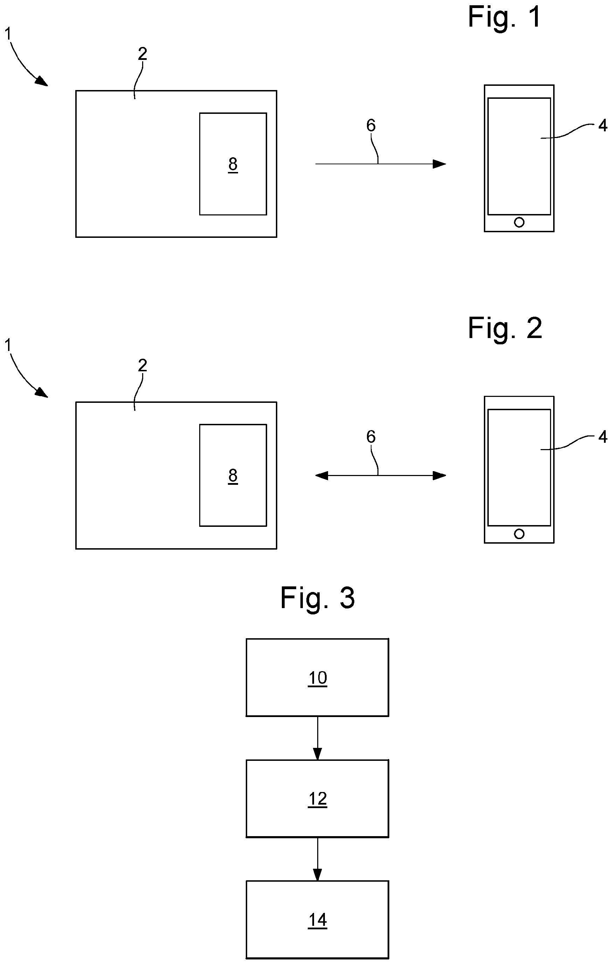

La figure 1 représente un ensemble 1 selon une première variante de réalisation. L'ensemble 1 est configuré pour mettre en œuvre un procédé de calibration d'au moins un capteur de température électronique 2 selon l'invention. Outre le capteur de température 2, l'ensemble 1 comprend également un dispositif mobile 4 en liaison avec le capteur de température 2. Selon la variante de réalisation particulière de la figure 1, la liaison de données 6 entre le capteur de température 2 et le dispositif mobile 4 est une liaison unidirectionnelle. Le dispositif mobile 4 est typiquement un téléphone portable de type smartphone, une tablette informatique ou encore un ordinateur portable, sans que cela ne soit limitatif dans le cadre de la présente invention.

Le capteur de température électronique 2 comprend, outre des moyens de mesure de la température (non représentés), des moyens 8 de transmission de données sur la liaison 6. Les moyens 8 de transmission de données sont par exemple constitués d'un émetteur de communications sans fil couplé à une antenne.

Le dispositif mobile 4 comprend des moyens de traitement de données et des moyens mémoire reliés aux moyens de traitement de données, ces différents moyens n'étant pas représentés sur la figure 1 pour des raisons de clarté. Les moyens de traitement de données sont par exemple constitués d'un ou plusieurs processeur(s). Les moyens mémoire stockent une application dédiée, qui est couplée à une interface de saisie de données.

La liaison de données 6 est par exemple une liaison radioélectrique par voie sans fil. La liaison de données 6 est typiquement une liaison radioélectrique conforme à la norme de communication Bluetooth, sans que cela ne soit limitatif dans le cadre de la présente invention. En variante, la liaison de données 6 peut être une liaison conforme à tout type de format propriétaire.

On suppose pour la suite que le capteur de température 2 est initialement placé dans plusieurs environnements prédéterminés. De préférence, le capteur de température 2 est initialement placé dans au moins trois environnements prédéterminés distincts. Pour chacun de ces environnements prédéterminés, un utilisateur du dispositif mobile 4 saisit une valeur de température initiale prédéterminée dans l'application dédiée du dispositif mobile 4, via l'interface de saisie de données. De préférence, au moins trois valeurs de températures initiales prédéterminées sont ainsi préalablement saisies directement dans l'application dédiée du dispositif mobile 4. Pour chaque environnement prédéterminé, la valeur de température initiale prédéterminée correspond à la température réelle de cet environnement, et est déterminée au préalable par l'utilisateur par tout moyen approprié.

Le procédé de calibration d'au moins un capteur de température électronique 2 selon un premier mode de réalisation de l'invention, mis en œuvre par l'ensemble de la figure 1, va maintenant être décrit en référence à la figure 3. Pour chaque environnement prédéterminé, le capteur de température 2 transmet au dispositif mobile 4 une valeur de température brute initiale mesurée dans cet environnement.

Au cours d'une étape initiale 10, le dispositif mobile 4 calcule une courbe de calibration, sur la base de chaque valeur de température initiale prédéterminée et de chaque valeur de température brute initiale correspondante. Plus précisément, les moyens de traitement de données du dispositif mobile 4 effectuent le calcul de cette courbe de calibration, sur la base des valeurs de températures initiales prédéterminées et des valeurs de températures brutes stockées dans les moyens mémoire du dispositif 4. Cette courbe de calibration dépend bien entendu du type de capteur, et le plus simple est de prendre une résistance à coefficient de température négatif CTN ou une résistance à coefficient de température positif CTP. A l'issue de cette étape initiale 10, les moyens de traitement du dispositif mobile 4 déterminent des paramètres de calibration à partir de la courbe de calibration.

Au cours d'une étape suivante 12, le dispositif mobile 4 stocke les paramètres de calibration déterminés à partir de la courbe de calibration. Plus précisément, les paramètres de calibration sont stockés dans les moyens mémoire du dispositif mobile 4.

Au cours d'une étape finale 14, l'ensemble 1 est utilisé dans des conditions de fonctionnement nominales. Le capteur de température électronique 2 transmet ainsi au dispositif mobile 4, via la liaison de données unidirectionnelle 6, des valeurs de températures brutes non corrigées. Le dispositif mobile 4 corrige alors chaque valeur de température brute mesurée par le capteur 2, au moyen des paramètres de calibration préalablement déterminés.

La figure 2 représente l'ensemble 1 selon une deuxième variante de réalisation. Dans cette deuxième variante de réalisation, les éléments décrits avec les mêmes références numériques que ceux de la première variante de réalisation sont identiques à ces derniers et ne seront donc pas décrits en détail à nouveau. Outre les moyens de mesure de la température et les moyens 8 de transmission de données sur la liaison 6, le capteur de température 2 comprend également des moyens de traitement de données et des moyens mémoire reliés aux moyens de traitement de données. Ces différents moyens ne sont pas représentés sur la figure 2 pour des raisons de clarté. Les moyens de traitement de données sont par exemple constitués d'un microprocesseur, qui est un organe calcul le plus simple. La liaison de données 6 entre le capteur de température 2 et le dispositif mobile 4 est une liaison bidirectionnelle.

Le procédé de calibration d'au moins un capteur de température électronique 2, mis en œuvre par l'ensemble de la figure 2, va maintenant être décrit selon un deuxième mode de réalisation de l'invention. Pour chaque environnement prédéterminé, le dispositif mobile 4 transmet au capteur de température 2, via la liaison de données bidirectionnelle 6, la valeur de température initiale prédéterminée saisie par l'utilisateur dans l'application dédiée du dispositif mobile 4.

Au cours d'une étape initiale 10, le capteur de température 2 calcule une courbe de calibration, sur la base de chaque valeur de température initiale prédéterminée (transmise par le dispositif mobile 4) et de chaque valeur de température brute initiale correspondante (cette dernière valeur étant mesurée par le capteur 2). Plus précisément, les moyens de traitement de données du capteur de température 2 effectuent le calcul de cette courbe de calibration, sur la base des valeurs de températures initiales prédéterminées et des valeurs de températures brutes correspondantes. A l'issue de cette étape initiale 10, les moyens de traitement du capteur de température 2 déterminent des paramètres de calibration à partir de la courbe de calibration.

Au cours d'une étape suivante 12, le capteur de température 2 stocke les paramètres de calibration déterminés à partir de la courbe de calibration. Plus précisément, les paramètres de calibration sont stockés dans les moyens mémoire du capteur de température 2.

Au cours d'une étape finale 14, l'ensemble 1 est utilisé dans des conditions de fonctionnement nominales. Le capteur de température électronique 2 corrige alors chaque valeur de température brute mesurée, au moyen des paramètres de calibration préalablement déterminés. A l'issue de cette étape 14, le capteur de température 2 transmet au dispositif mobile 4, via la liaison de données bidirectionnelle 6, des valeurs de températures corrigées.

Le procédé de calibration d'au moins un capteur de température électronique 2, mis en œuvre par l'ensemble de la figure 2, va maintenant être décrit selon un troisième mode de réalisation de l'invention. Pour chaque environnement prédéterminé, le capteur de température 2 transmet au dispositif mobile 4 une valeur de température brute initiale mesurée dans cet environnement.

Au cours d'une étape initiale 10, le dispositif mobile 4 calcule une courbe de calibration, sur la base de chaque valeur de température initiale prédéterminée (saisie au préalable par l'utilisateur dans l'application dédiée du dispositif mobile 4) et de chaque valeur de température brute initiale correspondante. Plus précisément, les moyens de traitement de données du dispositif mobile 4 effectuent le calcul de cette courbe de calibration, sur la base des valeurs de températures initiales prédéterminées et des valeurs de températures brutes stockées dans les moyens mémoire du dispositif 4. A l'issue de cette étape initiale 10, les moyens de traitement du dispositif mobile 4 déterminent des paramètres de calibration à partir de la courbe de calibration. Le dispositif mobile 4 transmet alors au capteur de température 2, via la liaison de données bidirectionnelle 6, les paramètres de calibration ainsi déterminés.

Au cours d'une étape suivante 12, le capteur de température 2 stocke les paramètres de calibration transmis par le dispositif mobile 4. Plus précisément, les paramètres de calibration sont stockés dans les moyens mémoire du capteur de température 2.

Au cours d'une étape finale 14, l'ensemble 1 est utilisé dans des conditions de fonctionnement nominales. Le capteur de température électronique 2 corrige alors chaque valeur de température brute mesurée, au moyen des paramètres de calibration stockés dans ses moyens mémoire. A l'issue de cette étape 14, le capteur de température 2 transmet au dispositif mobile 4, via la liaison de données bidirectionnelle 6, des valeurs de températures corrigées.

On conçoit ainsi que le procédé de calibration selon l'invention permet à un utilisateur d'effectuer lui-même la calibration du capteur de température de manière simplifiée, fiable et non contraignante, et ce directement dans l'environnement cible du capteur.

Bien que la présente invention ait été décrite en référence à la calibration d'un seul capteur de température 2, l'homme du métier comprendra que le procédé de calibration selon l'invention s'applique de la même manière à la calibration de plusieurs capteurs de température 2 par un même utilisateur du terminal mobile 4.

## Revendications

1. Procédé de calibration d'au moins un capteur de température électronique (2) en liaison (6) avec un dispositif mobile (4) faisant partie d'un ensemble (1) avec au moins ledit capteur de température électronique (2), le dispositif mobile (4) comprenant des moyens de traitement de données et des moyens mémoire reliés aux moyens de traitement de données, lesdits moyens mémoire stockant une application couplée à une interface de saisie de données, le capteur de température (2) étant placé initialement dans plusieurs environnements prédéterminés, et, pour chacun de ces environnements, une valeur de température initiale prédéterminée correspondant à la température réelle de cet environnement étant préalablement saisie directement dans l'application, via ladite interface, dans lequel le capteur de température (2) fournit, pour chacun des environnements prédéterminés, une valeur de température brute initiale mesurée dans ledit environnement,
le procédé comprenant les étapes consistant à :
- calculer (10) une courbe de calibration, sur la base de chaque valeur de température initiale prédéterminée saisie dans l'application, et de chaque valeur de température brute initiale correspondante fournie par le capteur de température (2),
- stocker (12) dans le dispositif mobile (4) ou dans le capteur de température (2), des paramètres de calibration déterminés à partir de la courbe de calibration, et
- corriger (14), au moyen desdits paramètres de calibration, chaque valeur de température brute mesurée par le capteur (2).

2. Procédé selon la revendication 1, **caractérisé en ce que** les étapes de calcul (10) de la courbe de calibration et de correction (14) de chaque valeur de température brute mesurée par le capteur (2) sont effectuées par le dispositif mobile (4), et **en ce que** les paramètres de calibration sont stockés dans le dispositif mobile au cours de l'étape de stockage (12), le capteur (2) transmettant au dispositif mobile (4), via une liaison de données unidirectionnelle (6), des valeurs de température brutes non corrigées.

3. Procédé selon la revendication 1, **caractérisé en ce que** les étapes de calcul (10) de la courbe de calibration et de correction (14) de chaque valeur de température brute mesurée par le capteur (2) sont effectuées par le capteur de température (2), et **en ce que** les paramètres de calibration sont stockés dans le capteur (2) au cours de l'étape de stockage (12), le dispositif mobile (4) transmettant au capteur (2), via une liaison de données bidirectionnelle (6), ladite au moins une valeur de température initiale prédéterminée, le capteur (2) transmettant au dispositif mobile (4), via la liaison de données bidirectionnelle (6), des valeurs de température corrigées.

4. Procédé selon la revendication 1, **caractérisé en ce que** l'étape de calcul (10) de la courbe de calibration est effectuée par le dispositif mobile (4), **en ce que** l'étape de correction (14) de chaque valeur de température brute mesurée par le capteur (2) est effectuée par le capteur de température (2), et **en ce que** les paramètres de calibration sont stockés dans le capteur (2) au cours de l'étape de stockage (12), le dispositif mobile (4) transmettant au capteur (2), via une liaison de données bidirectionnelle (6), lesdits paramètres de calibration, le capteur (2) transmettant au dispositif mobile (4), via la liaison de données bidirectionnelle (6), des valeurs de température corrigées.

5. Procédé selon l'une quelconque des revendications précédentes, **caractérisé en ce que** le capteur de température (2) est placé initialement dans au moins trois environnements prédéterminés distincts, au moins trois valeurs de températures initiales prédéterminées étant préalablement saisies directement dans l'application du dispositif mobile (4), chaque valeur de température initiale correspondant à la température réelle d'un desdits environnements.

6. Ensemble (1) comprenant un dispositif mobile (4) en liaison (6) avec au moins un capteur de température électronique (2), **caractérisé en ce que** ledit ensemble (1) est configuré pour mettre en œuvre le procédé de calibration selon l'une quelconque des revendications précédentes.
